# EUROPÄISCHE PATENTSCHRIFT

(11) **EP 2 476 105 B1**
(45) Veröffentlichungstag und Bekanntmachung des Hinweises auf die Patenterteilung: **19.06.2013**
(21) Anmeldenummer: 10752723.6
(22) Anmeldetag: 27.08.2010
(51) Int. Cl.: G07C 5/08, B60R 25/04, B60R 16/037

(54) **PROZESSORGESTEUERTES ZUGANGSBERECHTIGUNGS- UND BATTERIEMANAGEMENT FÜR ELEKTROFAHRZEUGE**
PROCESSOR-CONTROLLED ACCESS AUTHORIZATION AND BATTERY MANAGEMENT FOR ELECTRIC VEHICLES
GESTION DE L'AUTORISATION D'ACCÈS ET DE LA BATTERIE D'UN VÉHICULE ÉLECTRIQUE, COMMANDÉE PAR PROCESSEUR

(30) Priorität: 07.09.2009 DE 102009040420
(43) Veröffentlichungstag der Anmeldung: 18.07.2012
(73) Patentinhaber: Li-tec Battery GmbH, 01917 Kamenz (DE)
(72) Erfinder: SCHAEFER, Tim, 99768 Harztor (DE); GUTSCH, Andreas, 59348 Luedinghausen (DE)
(74) Vertreter: Wallinger, Michael
(86) Internationale Anmeldenummer: PCT/EP2010/005291
(87) Internationale Veröffentlichungsnummer: WO 2011/026593

(56) Entgegenhaltungen:
- EP-A1- 1 191 486
- DE-A1- 10 066 078
- DE-A1- 10 238 039
- DE-A1- 10 317 499
- DE-A1- 19 961 619

## Beschreibung

Die vorliegende Erfindung betrifft ein prozessorgesteuertes Zugangsberechtigungs- und Batteriemanagement für Elektrofahrzeuge, insbesondere ein Verfahren zur Steuerung des Betriebs eines über ein elektrochemischen Energiespeicher verfügenden Fahrzeugs, eine tragbare Kontrolleinrichtung zur Steuerung des Betriebs eines über ein elektrochemischen Energiespeicher verfügenden Fahrzeugs und ein Fahrzeug mit einem elektrochemischen Energiespeicher, dessen Betrieb durch eine solche Kontrolleinrichtung gesteuert wird.

Die Möglichkeiten der kommerziellen Nutzung von Elektrofahrzeugen hängen, besonders im öffentlichen Individualverkehr, von der erzielbaren Reichweite der Fahrzeuge und von den Ladezeiten der verwendeten elektrochemischen Energiespeicher ab. In diesem Zusammenhang ist ein möglichst optimaler Einsatz dieser elektrochemischen Energiespeicher von entscheidender Bedeutung, der durch ein entsprechend optimiertes so genanntes Batteriemanagement erreicht werden soll. Allgemeine Ziele eines solchen Batteriemanagements sind die Optimierung der Leistung der verwendeten Systeme bei gleichzeitiger Vermeidung oder Reduzierung von schädigenden Einflüssen, die beispielsweise durch unsachgemäße Lade- oder Entladeströme oder durch eine unsachgemäße Temperaturführung der verwendeten Systeme entstehen können.

So kann die Lebensdauer eines elektrochemischen Energiespeichers oder die Reichweite eines Elektrofahrzeugs unter anderem auch von der Fahrweise des Benutzers des Fahrzeugs abhängen, weil beispielsweise die Entladeströme oder die Betriebstemperatur eines elektrochemischen Energiespeichers mit den Beschleunigungen des von diesem Energiespeicher angetriebenen Fahrzeugs zusammenhängen. In diesem Zusammenhang gewinnt daher auch eine Zugangsberechtigungskontrolle an Bedeutung, die es erlaubt, Belastungen oder Beschädigungen, die von einem Benutzer eines Fahrzeugs verursacht wurden, diesem Benutzer zuzuordnen.

Aus dem Stand der Technik sind Transportsysteme mit batteriebetriebenen Fahrzeugen grundsätzlich bekannt.

So beschreibt die DE 38 32 840 A1 ein Transportsystem mit batteriebetriebenen Fahrzeugen, bei dem Ladestellen vorgesehen sind, an denen den Batterien der Fahrzeuge über Kontakte ein Ladestrom zugeführt werden kann. Sowohl die Steuerung der Fahrzeugbewegung als auch die Steuerung der Batterieladung erfolgt mit Hilfe von Rechnern. Dazu sind in den Fahrzeugen jeweils ein Stellglied und ein Mikrocomputer für die Steuerung der Batterieladung angeordnet.

Die DE 199 17 817 A1 beschreibt ein elektronisches Fahrzeugüberwachungssystem, das einen Datenträger in Form eines Fahrzeugschlüssels enthält, in welchen in einer Datenkommunikationsstation für den Fahrzeugbetrieb relevante Daten eingelesen werden können. Diese fahrzeugrelevanten Daten werden im Fahrzeug aus dem Datenträger ausgelesen. Umgekehrt können fahrzeugrelevante Daten im Fahrzeug in den Datenträger eingelesen werden und nach Beendigung des Fahrzeugbetriebs in der Datenkommunikationsstation ausgelesen werden.

Die DE 10 2004 021 380 A1 beschreibt eine Vorrichtung zur Stromversorgung, die mehrere Stromversorgungskomponenten aufweist. Die Stromversorgungskomponenten sind jeweils mit einer Kommunikationsschnittstelle versehen und über diese Kommunikationsschnittstelle und einen Kommunikationskanal mit einer gemeinsamen Analyse- und Steuereinheit verbunden. Die Analyse- und Steuereinheit steuert ein Lastmanagement der Stromversorgungskomponenten.

Die DE 10 2007 018 302 A1 beschreibt ein Verfahren und eine Vorrichtung zur Verlängerung der Batterielebensdauer durch eine adaptive Steuerung mit Hilfe von Reglern. Beschrieben werden ein Verfahren und ein System zur Verbesserung des Wirkungsgrades eines batteriegestützten Energieversorgungssystems.

Die US 5,168,206 beschreibt einen Batteriemanagementchip der die Ladungs- und Entladungsströme einer wiederaufladbaren Batterie steuert. Der Chip befindet sich in einem tragbaren Modul der mit der Batterie verbunden ist und mit der zur Ladung der Batterie verwendeten Energiequelle.

Die DE 199 61 619 A1 beschreibt ein Verfahren zur Personalisierung von Kraftfahreugen.

Der vorliegenden Erfindung liegt die Aufgabe zugrunde, bekannte Systeme und Verfahren zum prozessorgesteuerten Batteriemanagement für Elektrofahrzeuge weiter zu verbessern.

Dies wird erfindungsgemäß durch die Gegenstände der unabhängigen Ansprüche erreicht.

Erfindungsgemäß ist zur Steuerung des Betriebs eines über einen elektrochemischen Energiespeicher verfügenden Fahrzeugs eine tragbare, vom Fahrzeug entfernbare Kontrolleinrichtung zur Speicherung von Daten vorgesehen, die einem Benutzer des Fahrzeugs den Betrieb des Fahrzeugs ermöglicht und die dafür vorgesehen ist, Daten über die Betriebsweise des elektrochemischen Energiespeichers des Fahrzeugs in einem Datenspeicher zu speichern.

Im Zusammenhang mit der Beschreibung der vorliegenden Erfindung soll unter einem elektrochemischen Energiespeicher jede Einrichtung verstanden werden, die chemische Energie unmittelbar in elektrische Energie umwandeln und einer Anwendung zuführen kann. Unter diesem Begriff fallen also insbesondere galvanische Zellen oder Aggregate aus mehreren galvanischen Zellen, aber auch beispielsweise Brennstoffzellen und andere Einrichtungen zur Umwandlung chemischer Energie in elektrische Energie. Zu den elektrochemischen Speichern im Sinne der vorliegenden Erfindung gehören insbesondere wiederaufladbare elektrochemische Energiespeicher, denen elektrische Energie zugeführt werden kann, welche in dem elektrochemischen Energiespeicher dann als chemische Energie gespeichert wird. Wichtige Beispiele für solche elektrochemischen Energiespeicher sind wiederaufladbare galvanische Zellen oder Aggregate aus mehreren solcher Zellen.

Im Zusammenhang mit der Beschreibung der vorliegenden Erfindung soll unter einem Fahrzeug ein mobiles Verkehrsmittel verstanden werden, dass dem Transport von Gütern, Werkzeugen oder Personen dienen kann. Dieser Begriff umfasst folglich insbesondere Wasserfahrzeuge, Landfahrzeuge, Luftfahrzeuge, Raumfahrzeuge oder Kombinationen hiervon, wie beispielsweise Amphibienfahrzeuge. Unter einem Elektrofahrzeug soll in diesem Zusammenhang ein Fahrzeug mit Elektroantrieb verstanden werden. Dieser Begriff umfasst insbesondere Elektroautos, Elektrofahrräder, Elektroroller, Elektrobusse, Elektrolastkraftwagen, Solarfahrzeuge, Elektrolokomotiven, insbesondere also Straßenbahnen, S-Bahnen, U-Bahnen, solarbetriebene Fahrzeuge wie Solarautos, Solarflugzeuge, Elektroluftschiffe, Elektroboote, insbesondere U-Boote und Sonderfahrzeuge wie Elektrorollstühle, Elektrostapler, Golfmobile und insbesondere auch fahrerlose Transportfahrzeuge. Der Begriff umfasst insbesondere auch Hybridfahrzeuge, Brennstoffzellenfahrzeuge und andere elektrisch angetriebene Fahrzeuge.

Im Zusammenhang mit der Beschreibung der vorliegenden Erfindung soll unter einem Fahrzeug, welches über einen elektrochemischen Energiespeicher verfügt, jedes Fahrzeug verstanden werden, dass mit einem elektrochemischen Energiespeicher ausgerüstet ist. Dabei kann dieser elektrochemische Energiespeicher dem Antrieb des Fahrzeugs dienen, den Antrieb unterstützen oder zur Energieversorgung anderer Funktionen des Fahrzeugs dienen.

Im Zusammenhang mit der Beschreibung der vorliegenden Erfindung soll unter einer tragbaren Kontrolleinrichtung zur Speicherung und/oder zur Verarbeitung von Daten jede Einrichtung zur Speicherung und/oder Verarbeitung von Daten verstanden werden, die von einem Benutzer, insbesondere von einem menschlichen Benutzer, bei sich getragen werden kann. Unter diesen Begriff fallen also insbesondere Chipkarten, sogenannte "Personal Digital Assistants" (PDAs), sogenannte "Notebooks", Mobiltelefone, SIM-Karten, U-SIM-Karten und andere tragbare Einrichtungen zur Speicherung und Verarbeitung von Daten.

Vorteilhafte Ausführungsformen und Weiterbildungen sind Gegenstand der Unteransprüche.

Eine bevorzugte Ausführungsform der vorliegenden Erfindung ist dadurch gekennzeichnet, dass die tragbare, vom Fahrzeug entfernbare Kontrolleinrichtung zur Speicherung von Daten einem Benutzer des Fahrzeugs den Betrieb des Fahrzeugs in einer Weise ermöglicht, die zumindest auch durch Daten über die Betriebsweise des elektrochemischen Energiespeichers des Fahrzeugs charakterisiert wird, welche in einem Datenspeicher der Kontrolleinrichtung gespeichert sind.

Eine weitere bevorzugte Ausführungsform der vorliegenden Erfindung ist dadurch gekennzeichnet, dass das Fahrzeug einen Antrieb aufweist, der wenigstens teilweise aus dem elektrochemischen Energiespeicher mit Energie versorgt wird. Diese Ausführungsform schließt insbesondere Hybridfahrzeuge ein.

Eine weitere bevorzugte Ausführungsform der vorliegenden Erfindung ist dadurch gekennzeichnet, dass das Fahrzeug einen Antrieb (EM) aufweist, der ausschließlich aus dem elektrochemischen Energiespeicher mit Energie versorgt wird. Diese Ausführungsform schließt insbesondere Elektrofahrzeuge ein.

Eine weitere bevorzugte Ausführungsform der vorliegenden Erfindung ist dadurch gekennzeichnet, dass die tragbare Kontrolleinrichtung mit Mitteln zur Speicherung und Verarbeitung von Daten ausgestattet ist. Diese Ausführungsform ermöglicht einen besonderes wirksamen Schutz der auf der tragbaren Kontrolleinrichtung gespeicherten Daten gegen Manipulationsversuche durch Unberechtigte.

Eine weitere bevorzugte Ausführungsform der vorliegenden Erfindung ist dadurch gekennzeichnet, dass die Daten eine Sperrung oder Entsperrung des elektrochemischen Energiespeichers des Fahrzeugs ermöglichen. Diese Ausführungsform der Erfindung ermöglicht eine wirksame und vorteilhafte Zugangsberechtigungskontrolle für die Benutzung des damit ausgestatteten Fahrzeugs.

Eine weitere bevorzugte Ausführungsform der vorliegenden Erfindung ist dadurch gekennzeichnet, dass die Daten eine Steuerung der Leistungsabgabe des elektrochemischen Energiespeichers des Fahrzeugs bewirken. Diese Ausführungsform der Erfindung erlaubt beispielsweise die Umschaltung auf einen besonders energiesparenden Betriebsmodus des Fahrzeugs oder den Schutz der Batterie vor Überlastung durch überhöhte Geschwindigkeiten und damit verbundene hohe Entladungsströme. Außerdem kann hierdurch die Lebensdauer der Batterie erhöht werden.

Eine weitere bevorzugte Ausführungsform der vorliegenden Erfindung ist dadurch gekennzeichnet, dass die Daten eine Steuerung der Leistungsabgabe des elektrochemischen Energiespeichers in Abhängigkeit von der Geschwindigkeit des Fahrzeugs bewirken. Diese Ausführungsform der Erfindung ist mit dem Vorteil verbunden, dass eine wirksame Geschwindigkeitskontrolle des Fahrzeugs in einfacher Weise verwirklicht werden kann.

Eine weitere bevorzugte Ausführungsform der vorliegenden Erfindung ist dadurch gekennzeichnet, dass die Daten eine Steuerung der Leistungsabgabe des elektrochemischen Energiespeichers in Abhängigkeit von einer für das Fahrzeug geltenden oder von einer durch den Benutzer des Fahrzeugs zu beachtenden Höchstgeschwindigkeit bewirken. Diese Ausführungsform der Erfindung ist mit dem Vorteil verbunden, dass zusätzlich zu einer wirksamen Kontrolle der Fahrzeuggeschwindigkeit auch die Beachtung von Geschwindigkeitsbeschränkungen in einfacher und wirkungsvoller Weise möglich ist.

Einige der beschriebenen Ausführungsformen der vorliegenden Erfindung wird der Fachmann anhand seines Fachwissens zu kombinieren wissen; andere Ausführungsbeispiele, die hier oder in der nachfolgenden Beschreibung nicht abschließend beschrieben werden können, wird der Fachmann mit Hilfe seines Fachwissens anhand der vorliegenden Beschreibung leicht auffinden können. Die Erfindung ist nicht auf die hier beschriebenen Ausführungsbeispiele beschränkt.

Im Folgenden wird die Erfindung anhand bevorzugter Ausführungsbeispiele und mit Hilfe der Figuren näher beschrieben. Dabei zeigen
- Figur 1: in schematischer Weise den grundsätzlichen Aufbau eines erfindungsgemäßen Fahrzeugs anhand eines bevorzugten Ausführungsbeispiels der vorliegenden Erfindung;
- Figur 2: in schematischer Weise das grundsätzliche Zusammenwirken verschiedener Komponenten eines erfindungsgemäßen Fahrzeugs in Zusammenhang mit einem erfindungsgemäßen Verfahren anhand eines bevorzugten Ausführungsbeispiels der vorliegenden Erfindung;
- Figur 3: in schematischer Weise ein weiteres Ausführungsbeispiel der vorliegenden Erfindung; und
- Figur 4: in schematischer Weise den Aufbau einer erfindungsgemäßen tragbaren Kontrolleinrichtung zur Speicherung und Verarbeitung von Daten anhand eines bevorzugten Ausführungsbeispiels der Erfindung.

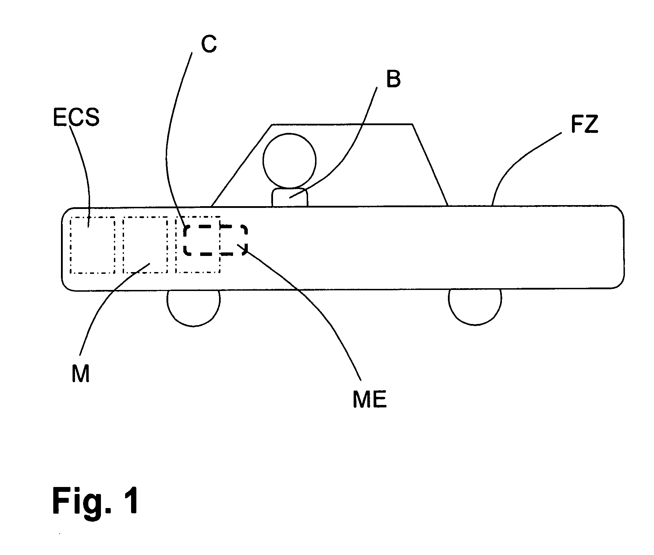

Wie in Figur 1 schematisch dargestellt ist, sieht die vorliegende Erfindung ein Verfahren zur Steuerung des Betriebs eines über einen elektrochemischen Energiespeicher ECS verfügenden Fahrzeugs FZ vor. Dabei ermöglicht eine tragbare, vom Fahrzeug entfernbare Kontrolleinrichtung ME zur Speicherung und vorzugsweise auch zur Verarbeitung von Daten einem Benutzer des Fahrzeugs den Betrieb des Fahrzeugs in einer Weise, die zumindest auch durch Daten D über die Betriebsweise des elektrochemischen Energiespeichers ECS des Fahrzeugs FZ charakterisiert wird, welche in einem Datenspeicher DS der Kontrolleinrichtung gespeichert sind.

Die tragbare Kontrolleinrichtung ME ist dabei vorzugsweise eine Chipkarte, die drahtlos oder über galvanische Verbindungen mit einer Steuerungseinrichtung C des Fahrzeugs FZ zusammenwirkt. Die Steuerungseinrichtung C ist vorzugsweise ein entsprechend modifizierter Bordcomputer des Fahrzeugs FZ, der über eine entsprechende Schnittstelle zur Kommunikation mit der tragbaren Kontrolleinrichtung ME verfügt und der die auf der tragbaren Kontrolleinrichtung ME gespeicherten Daten D zur Steuerung des Betriebs des Fahrzeugs und der Betriebsweise des elektrochemischen Energiespeichers verwendet.

Die Steuerungseinrichtung C ist ein Bestandteil der Steuerung des Fahrzeugs und steuert unter anderem auch die Betriebsweise des elektrochemischen Energiespeichers und dessen Verwendung zum Betrieb des Fahrzeugs. Dazu wertet diese Steuerungseinrichtung C auf der tragbaren Kontrolleinrichtung ME gespeicherte Daten D aus. Diese Daten D bestehen vorzugsweise aus mehreren Datensätzen, welche Daten zur Zugangsberechtigungskontrolle, zur Leistungsregelung des Fahrzeugantriebs, zum Batteriemanagement des elektrochemischen Energiespeichers und ggf. weitere Daten zur Steuerung des Fahrzeugbetriebs umfassen. Diese Daten D und insbesondere die sie konstituierenden Datensätze sind vorzugsweise in einem Speicherbereich SB der tragbaren Kontrolleinrichtung ME gespeichert. Die Daten sind vorzugsweise in einem Datenspeicher DS dieses Speicherbereichs gespeichert, der vorzugsweise von einem Programmspeicher PS getrennt ist. Die Steuerungseinrichtung C greift auf diese Daten D über die Kommunikationsschnittstelle I/O der tragbaren Kontrolleinrichtung ME zu. Vorzugsweise wird der Datenzugriff über den Prozessor P der tragbaren Kontrolleinrichtung ME vermittelt.

Die Daten D sind vorzugsweise vor Fahrtantritt mit Hilfe eines Programmiergerätes PG über die Kommunikationsschnittstelle I/O in den Speicherbereich SB der tragbaren Kontrolleinrichtung ME eingespeichert worden.

Je nach Ausführungsvariante der Erfindung ist es jedoch auch möglich, dass während der Fahrt oder während des Betriebs des Fahrzeugs Daten von der Steuerungseinrichtung in die Datenspeicherbereiche SB der tragbaren Kontrolleinrichtung ME geschrieben werden. Bei diesen Daten kann es sich beispielsweise um Daten handeln, welche die Betriebsweise des Fahrzeugs, insbesondere die aufgetretenen Beschleunigungen, Geschwindigkeiten, oder die Leistungsabgabe des elektrochemischen Energiespeichers betreffen. Anhand dieser Daten, die nach der Fahrt beispielsweise durch das Programmiergerät PG ausgelesen werden können, kann anschließend die spezielle Betriebsweise des Fahrzeugs, die vom Benutzer B gewählt wurde, ermittelt und rekonstruiert werden, sodass eine der vom Benutzer tatsächlich gewählten Fahrzeugbetriebsweise angepasste Vergebührung des Benutzers möglich wird.

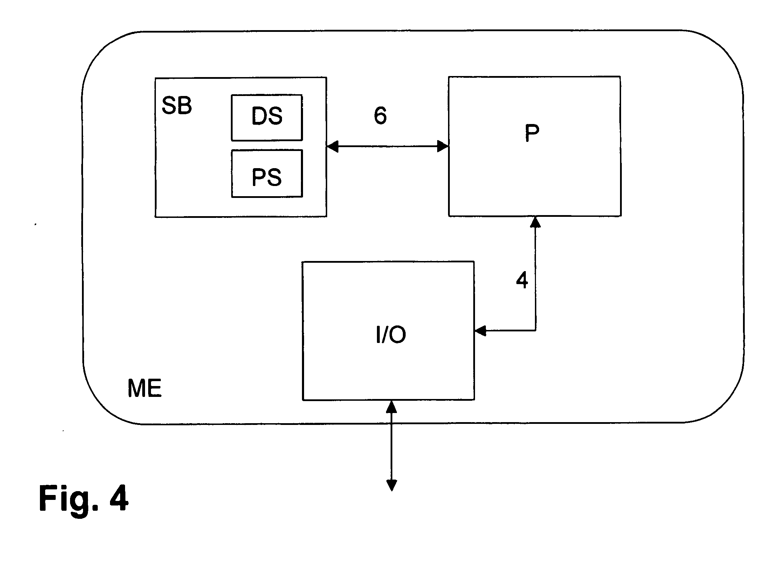

Die anhand eines bevorzugten Ausführungsbeispiels in Figur 4 dargestellte tragbare Kontrolleinrichtung ME verfügt vorzugsweise über einen Speicherbereich SB mit vorzugsweise einem Datenspeicher DS und vorzugsweise einem Programmspeicher PS und über einen Prozessor P sowie über eine Datenkommunikationsschnittstelle I/O zum Austausch von Daten beispielsweise mit einem Programmiergerät PG für derartige Datenträgereinrichtungen.

Wie in Figur 4 schematisch dargestellt, ist der Zugriff auf den Speicherbereich vorzugsweise durch den Prozessor P geschützt mit der Maßgabe, dass ein Austausch von Daten 6, 4 mit der Kommunikationsschnittstelle I/O ausschließlich über den Prozessor P möglich ist, um den Schutz der auf der tragbaren Kontrolleinrichtung gespeicherten Daten gegen Manipulationen zu sichern.

Die vorzugsweise in dem Datenspeicher DS des Speicherbereichs SB der tragbaren Kontrolleinrichtung ME gespeicherten Daten über die Betriebsweise des elektrochemischen Energiespeichers ECS des Fahrzeugs FZ werden vorzugsweise dazu verwendet, die Lade- und/oder Entladeströme des elektrochemischen Energiespeichers ECS so zu steuern, dass das Antriebsaggregat M sich so verhält, wie dies für den durch die gespeicherten Daten D charakterisierten Betrieb des Fahrzeugs erforderlich ist.

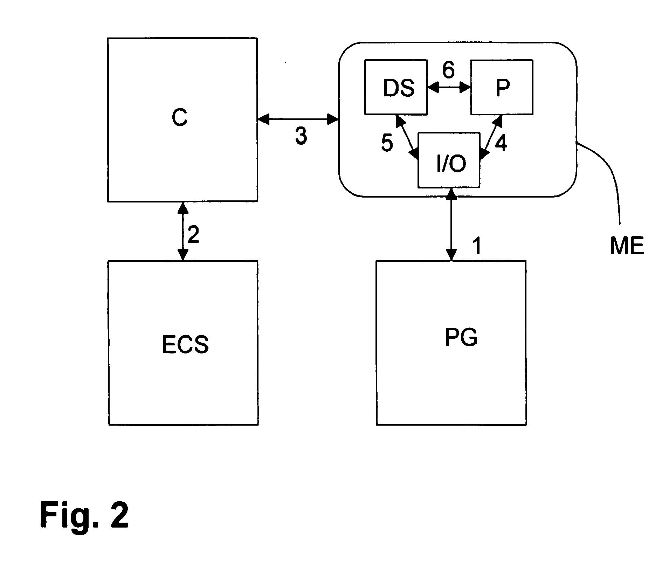

Wie in Figur 2 schematisch dargestellt ist, kommuniziert dazu die Steuereinrichtung C des Fahrzeugs FZ vorzugsweise über eine entsprechende Datenverbindung 2 mit dem elektrochemischen Energiespeicher ECS in den die zur Umsetzung der Steuerbefehle erforderliche Leistungselektronik vorzugsweise integriert ist. Die Steuereinheit C tauscht Daten 3 mit der tragbaren Kontrolleinrichtung ME aus. Auch dieser Austausch von Daten vermeidet in vorteilhafter Weise und vorzugsweise einen unmittelbaren Zugriff der Steuereinheit auf die Speicherbereiche DS bzw. PS, sondern tauscht mit Hilfe des vorzugsweise in die tragbare Kontrolleinrichtung ME integrierten Prozessors P Daten mit der tragbaren Kontrolleinrichtung aus, um einen Schutz der Daten gegen Manipulation zu unterstützen und zu gewährleisten.

Ein unmittelbarer Austausch 5 von Daten zwischen der Kommunikationsschnittstelle I/O der tragbaren Kontrolleinrichtung ME und dem Datenspeicher DS sollte vorzugsweise nur ausnahmsweise stattfinden und privilegierten Anwendern der tragbaren Kontrolleinrichtung, wie beispielsweise dem Kartenhersteller oder dem Kartenherausgeber vorbehalten sein.

Eine erfindungsgemäße tragbare Kontrolleinrichtung ME kann beispielsweise mit dem kontaktlosen Speicherchip des Typs SRT512 des Herstellers ST Microelectronics realisiert werden. Es handelt sich bei diesem Baustein um einen kurzreichweitigen, bei 13,56 MHz operierenden kontaktlosen Speicherchip mit einem 512 Bit großen EEPROM und Anti-Kollisions-Funktionen. Der SRT512 ist speziell für Anwendungen mit kurzen Übertragungsdistanzen, beispielsweise gemäß ISO 14 443-B konzipiert, die wie z.B. bei Anwendungen mit Zugangskontrolle oder bei der Prüfung von Veranstaltungskarten und Fahrscheinen in Massenverkehrsmitteln wiederverwendbare sogenannte Token benötigen. Dieser Baustein verfügt über einen eingebauten Anti-Kollisions-Mechanismus zur Vermeidung von Konflikten mit benachbarten Karten und erreicht die für diese Anwendungen erforderlichen Transaktionsgeschwindigkeiten. In diesem Baustein sind Rechenfunktionen integriert, unter anderem mit zwei Zählern und einer so genannten Anti-Tear-Funktionalität.

Im Zusammenhang mit der Realisierung der vorliegenden Erfindung kann auch beispielsweise die kontaktlose Smart-Card des Typs ST19WR von ST Microelectronics vorteilhaft eingesetzt werden die als sogenannte Guthabenkarte bereits weite Verbreitung gefunden hat. Dieser Baustein verbindet einen großen Datendurchsatz und entsprechend hohe Transaktionsgeschwindigkeiten mit einem hohen Maß an Sicherheit vor Angriffen und Fälschungen. In ähnlicher Weise können weitere kontaktlose oder kontaktgebundene Produkte wie beispielsweise sogenannte RFID-Chips oder andere kontaktlose Smart-Cards eingesetzt werden.

Chipkarten, oft auch als Smartcard oder Smart-Card oder Integrated Circuit Card (ICC) bezeichnet, sind spezielle Plastikkarten mit eingebautem integriertem Schaltkreis (Chip), der eine Hardware-Logik, Speicher oder auch einen Mikroprozessor enthält. Chipkarten können nach unterschiedlichen Kriterien unterschieden werden. Die eingängigste ist die Unterscheidung zwischen Speicher-Chipkarten mit einfacher Logik und Prozessor-Chipkarten mit eigenem Karten-Betriebssystem und kryptografischen Fähigkeiten.

Chipkarten werden auch über die Schnittstelle nach außen unterschieden. Den kontaktbehafteten Chipkarten stehen die kontaktlosen Chipkarten gegenüber. Das Herz einer Chipkarte ist der integrierte Schaltkreis (Chip), der die Fähigkeiten und somit das Anwendungsgebiet der Chipkarte bestimmt. Der Chip wird häufig vom Chipkartenmodul geschützt, sodass der Chip normalerweise komplett eingebettet und nicht sichtbar ist. Das Modul stellt auch die Verbindung zur Außenwelt dar.

Die einfachen Speicher-Chipkarten bestehen nur aus einem Speicher, der ausgelesen oder beschrieben werden kann. Über die Schnittstelle ist es möglich, beispielsweise sequenziell auf die einzelnen Speicherzellen zuzugreifen. Verwendung finden Speicherkarten vorzugsweise dort, wo es nur auf die Speicherung der Daten ankommt, nicht aber auf das Abwickeln komplexer Vorgänge. Abhängig von dem verwendeten Chip können die Daten durch PINs oder Passwörter vor dem Auslesen oder der Veränderung durch Dritte geschützt werden.

Prozessorchipkarten verfügen über einen Mikroprozessor, über den man auf die gespeicherten Daten zugreifen kann. Bei Prozessorchipkarten gibt es oft keine Möglichkeit, auf den Datenbereich direkt zuzugreifen. Der Umweg über den Mikroprozessor erlaubt es, die Daten auf der Karte über kryptographische Verfahren vor fremdem Zugriff zu schützen. Die entsprechenden kryptographischen Algorithmen laufen vorzugsweise als entsprechende Programme auf dem Prozessor ab.

Dabei können vorzugsweise kryptographische Verfahren auf der Grundlage der der sogenannten "Public Key Cryptography" zum Einsatz kommen. Dabei wird ein Paar zusammenpassender Schlüssel eingesetzt. Der eine ist ein öffentlicher Schlüssel, der - im Falle eines Verschlüsselungsverfahrens - zum Verschlüsseln von Nachrichten für den Schlüsselinhaber benutzt wird. Der andere ist ein privater Schlüssel, der vom Schlüsselinhaber geheim gehalten werden muss und zur Entschlüsselung eingesetzt wird. Ein solches System wird als asymmetrisch bezeichnet, da für Ver- und Entschlüsselung unterschiedliche Schlüssel verwendet werden.

Mit dieser Methode wird nur ein einziges Schlüsselpaar für jeden Teilnehmer benötigt, da der Besitz des öffentlichen Schlüssels die Sicherheit des privaten Schlüssels nicht aufs Spiel setzt. Ein solches System kann auch zur Erstellung einer digitalen Signatur genutzt werden. Die digitale Signatur wird aus den zu signierenden Daten oder ihrem Hashwert und dem privaten Schlüssel berechnet. Die Korrektheit der Signatur - und damit die Integrität und Authentizität der Daten - kann durch entsprechende Operationen mit dem öffentlichen Schlüssel überprüft werden. Public-Key-Verfahren können auch zur Authentifizierung in einer interaktiven Kommunikation und damit zur Zugangsberechtigungskontrolle im Zusammenhang mit der vorliegenden Erfindung verwendet werden.

Die Möglichkeit, auf diesen Mikroprozessoren anwendungsspezifische Programme laufen zu lassen, bietet viele Vorteile im Vergleich zu Speicherkarten, z.B. bei Chipkarten, die als Zahlungsmittel verwendet werden (Geldkarte) oder wichtige Daten (z.B. SIM-Karten für Handys) enthalten. Oft enthält die Karte auch einen signierten Schlüssel und dient als Dekoderkarte (wie z.B. beim Bezahlfernsehen oder sonstigen Systemen mit einer Zugangskontrolle). Bereits bei der Herstellung der Chips können Teile des Karten-Betriebssystem (COS) und die vorgesehenen Anwendungen auf die Karte geladen werden.

Insbesondere Smart-Cards können als sicherer Informations- oder Schlüsselspeicher dienen. Sie können aber auch zur Implementierung verschiedener Sicherheitsdienste wie beispielsweise einer Authentifikation, einer Verschlüsselung, einer Signatur eingesetzt werden. Häufig sind dabei private Schlüssel auf der Smart-Card gespeichert. Da diese geheimen Schlüssel gegen ein unberechtigtes Auslesen geschützt werden, ist das Erspähen des Schlüssels nicht möglich.

Derartige Bausteine eigenen sich auch zur Steuerung des Zugangs zu vorab bezahlten Elektrofahrzeugen wobei dies vorteilhaft mit einer Ausführungsform der vorliegenden Erfindung geschieht, bei der die auf der tragbaren Kontrolleinrichtung ME gespeicherten Daten D eine Sperrung oder eine Entsperrung des elektrochemischen Energiespeichers des Fahrzeugs ermöglichen. Dies geschieht grundsätzlich unter Einsatz der Arbeitsweise herkömmlicher elektronischer Zugangsberechtigungsausweise mit der Maßgabe, dass vorzugsweise eine Sperrung oder Entsperrung des elektrochemischen Energiespeichers des Fahrzeugs erfolgt, womit eine besonders wirkungsvolle Zugangsberechtigungskontrolle verbunden ist. Die Sperrung oder Entsperrung erfolgt dabei vorzugsweise in der Weise, dass die Steuereinheit C des Fahrzeugs, beispielsweise sein so genannter Bordcomputer, die Berechtigung eines Benutzers B mit Hilfe von auf der von ihm verwendeten tragbaren Kontrolleinrichtung ME gespeicherten Daten prüft und im Falle eines positiven Ergebnisses dieser Prüfung eine Entsperrung des elektrochemischen Energiespeichers durchführt.

Die Zugangsberechtigungskontrolle kann im Zusammenhang mit der vorliegenden Erfindung vorteilhaft nach dem Beispiel der Elektronische Geldbörsen realisiert werden. Diese elektronischen Geldbörsen ermöglichen die bargeldlose Offline-Zahlung kleiner Geldbeträge - mit oder ohne die Eingabe einer PIN - vorzugsweise mittels Chipkarten. Eine Elektronische Geldbörse arbeitet häufig nach dem Vorabbezahlungs- ("Pay Before")- Modus.

Zunächst erfolgt ihre Ladung an einem Ladeterminal mit einem Geldbetrag. Erst dann kann unter Zuhilfenahme von Zahlungsterminals bargeldlos gezahlt werden. Ladebeträge werden häufig einem Pool-Konto gutgeschrieben, Zahlungsbeträge werden dann dem Pool-Konto belastet. Dies ist jedoch bei elektronischen Geldbörsen, die auf Guthabenbasis geführt werden, nur möglich, wenn ein Guthaben vorhanden ist; ansonsten ist ein vorheriges erneutes Aufladen notwendig. Vor allem kleinere Beträge können so rasch und problemlos damit beglichen werden, ohne dass jede Annahmestelle ständig vernetzt sein muss.

Eine wirksame Zugangsberechtigungskontrolle kann vorteilhaft auf der Grundlage einer Authentifizierung (oder Authentifikation) erfolgen. Bei einer Authentifizierung zwischen zwei Subjekten "authentisiert" - nach dem herrschenden Sprachgebrauch - sich der "Authentifikant", während der "Authentifikator" den Authentifikanten "authentifiziert".

Die Authentifizierung ist eine Verifizierung der Behauptung der Authentizität. Oft wird die Authentifizierung eines Benutzers dabei als Identifizierung dieses Benutzers verwendet.

In dem Beispiel eines Computerprogramms, welches Zugang zu einem gesicherten Bereich gewähren kann, behauptet der Benutzer zuerst seine Identität, indem er einen Benutzernamen eingibt. Zusätzlich authentisiert er sich, indem er sein Passwort angibt. Das Programm kann den Benutzer anhand dieser Angaben identifizieren und authentifiziert daraufhin dessen Identität: Das Passwort, welches nur der korrekte Benutzer eingegeben haben kann, beweist, dass es tatsächlich der Benutzer ist, der er behauptet zu sein. Damit steht für das Programm die Identität des Kommunikationspartners fest. Ob dem authentifizierten Benutzer der Zugang gewährt werden darf, entscheidet das Programm im Rahmen der Autorisierung. Ist auch dies erfolgreich, gewährt das Programm dem Benutzer Zugang zum gesicherten Bereich.

Zur Authentifikation können vorteilhaft auch Kryptoverfahren eingesetzt werden, wie beispielsweise Public-Key-Verfahren oder die von SIM-Karten bekannten Algorithmen. Dabei signiert der Authentifikant beispielsweise eine ihm vorher unbekannte, ihm vom Authentifkator übermittelte Zufallszahl, indem er diese mit dem geheimen (privaten) Schlüssel des Benutzers verschlüsselt und sendet die signierte Zufallszahl zum Authentifikator zurück. Der Authentifikator entschlüsselt diese Nachricht mit dem öffentlichen Schlüssel des Benutzers. Erhält er die ursprüngliche Zufallszahl zurück, beweist dies, dass diese Zufallszahl vom Authentifikanten mit dem geheimen Schlüssel des Benutzers verschlüsselt worden sein, dieser Authentifikant also im Besitz dieses geheimen Schlüssels des Benutzers (gewesen) sein muss. Die mit dem geheimen Schlüssel des Benutzers verschlüsselte Zufallszahl dient dann sozusagen als Token zur Durchführung einer Zugangsberechtigungsprüfung.

Die nach erfolgreicher Zugangsberechtigungskontrolle erfolgende Entsperrung kann dabei zeitgesteuert, wiederum durch eine Benutzungszeit des Benutzers definierende, auf der tragbaren Kontrolleinrichtung ME gespeicherte Daten D erfolgen, sodass nach Ablauf der durch die auf der tragbaren Kontrolleinrichtung gespeicherten Daten charakterisierten Höchstbenutzungszeit eine Sperrung des elektrochemischen Energiespeichers erfolgt.

Neben der Schaffung eines gesicherten Zugangs für Elektrofahrzeuge durch das Sperren und/oder Entsperren einer Batterie mit Hilfe eines Tokens als Wegfahrsperre kann die vorliegende Erfindung in einigen Ausführungsformen auch zur Steuerung der Leistungsabgabe des elektrochemischen Energiespeichers des Fahrzeugs verwendet werden. Sofern nämlich die auf der tragbaren Kontrolleinrichtung gespeicherten Daten D ihrem Inhalt nach zur Steuerung der Leistungsabgabe des elektrochemischen Energiespeichers des Fahrzeugs geeignet sind, ist es möglich, mit Hilfe der erfindungsgemäßen tragbaren Kontrolleinrichtung die Berechtigung eines Benutzers zur Verwendung eines Hochleistungsbetriebsmodus ("Power Modus") zu prüfen, und es ist damit ferner möglich zu prüfen, ob der Benutzer der tragbaren Kontrolleinrichtung lediglich zur Verwendung eines Energiesparmodus ("Öko-Modus") berechtigt ist.

Um die Leistungsabgabe eines elektrochemischen Energiespeichers entsprechend zu steuern, ist es erforderlich, dass die auf der tragbaren Kontrolleinrichtung ME gespeicherten Daten die elektrochemischen Charakteristiken des verwendeten Energiespeichers berücksichtigen. Unterschiedliche elektrochemische Energiespeicher müssen nämlich aufgrund ihrer unterschiedlichen Technologien jeweils angepasste Ladeverfahren und Entladeverfahren haben. Dabei werden normalerweise maximale Strom- und Spannungswerte zeitweise vorgegeben.

Insbesondere Traktionsbatterien, also elektrochemische Energiespeicher die zum Antrieb von Elektrofahrzeugen verwendet werden, müssen vor einer so genannten Tiefentladung oder Tiefenentladung geschützt werden. Ein solcher Schutz vor Tiefenentladung erfordert, dass der Fahrstrom des Fahrzeugs automatisch begrenzt wird. Das Fahrzeug kann dann noch mit verminderter Leistung betrieben werden und über eine spezielle Einrichtung ("Kick-down") kann die Strombegrenzung in Gefahrensituationen auch aufgehoben werden.

Insbesondere Traktionsbatterien sollten nach Möglichkeit in ihrem optimalen Temperaturbereich betrieben werden. Auch zur Abschätzung der Restreichweite eines mit einem elektrochemischen Energiespeicher betriebenen Elektrofahrzeugs sowie zur Bestimmung der verfügbaren Energie zur Beschleunigung des Fahrzeugs oder der möglichen Aufnahme von chemisch abzuspeichernder Bremsenergie ist eine möglichst genaue Kenntnis des inneren Zustandes der Batterie erforderlich oder wenigstens nützlich. Der innere Zustand eines elektrochemischen Energiespeichers kann dabei physikalisch als eine Aggregation von Zustandsgrößen aufgefasst werden, die Zustandsgrößen wie beispielsweise Temperatur, das Alter des Energiespeichers, die Zyklenzahl, den Innenwiderstand, den Ladezustand und ähnliche Zustandgrößen umfasst.

Zur Beherrschung von Spitzenlasten eignen sich insbesondere auch Doppelschichtkondensatoren als elektrochemische Energiespeicher deren Einsatz insbesondere dann vorteilhaft ist, wenn große Leistungen über kurze Zeiträume gespeichert oder zur Verfügung gestellt werden müssen. Für ein entsprechend ausgerüstetes Fahrzeug bedeutet das, dass Spitzenlasten des Fahrzeugantriebs nach Möglichkeit aus dem Doppelschichtkondensator bereitgestellt werden, wogegen die niedrigen Durchschnittslasten vorzugsweise einer galvanischen Batterie entnommen werden.

Mit Hilfe solcher Doppelschichtkondensatoren lässt sich die verfügbare Kapazität einer Batterie in einem Elektrofahrzeug deutlich steigern, insbesondere dann wenn eine herkömmliche galvanische Batterie in Verbindung mit einem Doppelschichtkondensator verwendet wird. Im Zusammenhang mit einem Ausführungsbeispiel der vorliegenden Erfindung ist es vorgesehen, den Einsatz solcher Doppelschichtkondensatoren oder anderer, die Leistung des Fahrzeugs steigernden Einrichtungen von einer Berechtigung des Benutzers abhängig zu machen, die sich vorzugsweise aus den auf der tragbaren Kontrolleinrichtung ME gespeicherten Daten ergibt und von einer Steuereinrichtung C des Fahrzeugs geprüft wird.

Diese Schilderungen mögen beispielhaft verdeutlichen, dass verschiedene Betriebsweisen eines elektrochemischen Energiespeichers in einem damit ausgerüsteten Fahrzeug in Abhängigkeit von den mit den jeweiligen vom Benutzer gewählten Betriebsweise verbunden Belastungen mit unterschiedlichen Kosten verbunden sind. Mit der vorliegenden Erfindung ist es nun möglich, die einem Benutzer zur Verfügung stehenden Betriebsweisen eines Fahrzeugs nach Maßgabe des von ihm gewählten Tarifs und der damit verbundenen Bezahlung zu begrenzen oder den Zugang zu speziellen Betriebsweisen zu ermöglichen. Dazu ist es lediglich erforderlich, dass auf der tragbaren Kontrolleinrichtung, die der Benutzer mit sich führt, und welche er zusammen mit dem Elektrofahrzeug verwendet, entsprechende Daten gespeichert sind, die den Benutzer gegenüber dem Elektrofahrzeug, insbesondere gegenüber seiner Steuereinheit C als berechtigt ausweisen die entsprechenden Betriebsarten zu benutzen.

Die vorliegende Erfindung eignet sich in vorteilhafter Weise für Anwendungen, bei denen einem Benutzer ein Zugang, vorzugsweise ein vorab bezahlter Zugang, zu einem Elektrofahrzeug verschafft werden soll, und bei dem vorzugsweise auch die Berechtigung geprüft werden soll, dass dieser Benutzer den Ökomodus oder den Powermodus oder beide Modi oder auch andere Betriebsmodi des Elektrofahrzeugs benutzen darf. Die Erfindung eignet sich besonders zur Schaffung eines gesicherten Zugangs für Elektrofahrzeuge, wobei es bevorzugt ist, die Zugangssicherung durch eine Sperrung der Batterie mit Hilfe eines so genannten "Tokens" zu realisieren, sodass gleichzeitig eine Wegfahrsperre realisiert ist, damit andere Sicherungen wie beispielsweise Lenkradkrallen oder Fahrradschlösser entfallen können. In vorteilhafter Weise wird die Erfindung dabei mit Hilfe von Chipkarten und auf Guthabenbasis realisiert.

Andere Ausführungsbeispiele der Erfindung sehen insbesondere die Erkennung aktueller Verkehrsgeschwindigkeitsbeschränkungen vor, beispielsweise durch speziell eingerichtete Kameras oder andere Sensoren und vorzugsweise unter Ausgabe einer Warnung an den Fahrer. In bestimmten Bereichen, beispielsweise in der Innenstadt oder bei Baustellen, an denen bestimmte Geschwindigkeitsbeschränkungen vorgesehen sind, kann gemäß einiger Ausführungsbeispiele der Erfindung durch eine automatische Erkennung der dort vorgeschriebenen Geschwindigkeitsbeschränkung ein automatisches Umschalten auf bestimmte Betriebsmodi des Fahrzeugs, wie beispielsweise den Ökomodus, vorgesehen sein. Auf diese Weise lassen sich ein Schutz des elektrochemischen Energiespeichers (Batterie) und/oder eine Erhöhung der Lebensdauer des elektrochemischen Energiespeichers mit dem Einhalten von vorgeschriebenen Geschwindigkeitsbeschränkungen verbinden.

Dabei sind Ausführungsbeispiele der Erfindung vorgesehen, bei denen je nach bezahltem Tarif das Fahrzeug nur in bestimmten Betriebsmodi, also beispielsweise nur im Ökomodus oder in leistungsmäßig abgestuften Betriebsmodi betrieben werden kann. Bei einigen Ausführungsbeispielen der Erfindung wird die Zugangsberechtigungskontrolle mit Hilfe eines Tokens realisiert, der beispielsweise als so genannter RFID-Chip ausgeführt sein kann, und welcher mit dem Batteriemanagementsystem kommuniziert und dabei unter anderem die Freigabe von Belastungsalgorithmen im Batteriesystem übernimmt, die der Freigabe bestimmter Leistungsbereiche beim Betrieb des Fahrzeugs dienen. Insbesondere bei solchen Ausführungsbeispielen der vorliegenden Erfindung, bei denen entsprechende tragbare Einrichtungen, wie z.B. Chipkarten verwendet werden, ist ein Zündschloss als Mittel zur Zugangsberechtigungskontrolle nicht mehr erforderlich. Der elektronische Berechtigungsausweis (Token) aktiviert oder deaktiviert auch das Batteriemanagementsystem, welches vorzugsweise bei längeren Standzeiten des Elektrofahrzeugs - in Abhängigkeit vom Batterietyp - einen Ausgleichszyklus fährt, damit die im elektrochemischen Energiespeicher gespeicherte Energie möglichst gut verteilt zur Verfügung steht und damit der elektrochemische Energiespeicher möglichst leistungsbereit bleibt.

Da Elektrofahrzeuge insbesondere auf kurzen Strecken zu großen Beschleunigungen in der Lage sind, ist es für den Schutz des elektrochemischen Energiespeichers aber auch der Insassen des Fahrzeugs unter Umständen wichtig, den Benutzer des Fahrzeugs vor der Übertretung von Geschwindigkeitsbeschränkungen zu schützen, um einerseits die Fahrsicherheit zu erhöhen und andererseits um die Batterielebensdauer zu verlängern. Dies geschieht vorzugsweise, indem aktuelle Geschwindigkeitsbeschränkungen erfasst werden, vorzugsweise optisch in Echtzeit am Schild, und indem das hierbei erzeugte Signal an das Batteriemanagement der Batterie oder das Energiemanagement des elektrochemischen Energiespeichers übertragen wird und indem dort der Ökomodus oder ein anderer Betriebsmodus aktiviert wird, bei dem der Stromfluss reduziert und die Beschleunigung begrenzt wird. Vorzugsweise wird auch die Bremsenergie in den elektrochemischen Energiespeicher eingespeist (rekuperiert).

Bei einem weitern Ausführungsbeispiel der Erfindung ist es vorgesehen, die Steuereinrichtung C des Fahrzeugs so an ein angeschlossenes Navigationsgerät zu koppeln, dass beispielsweise in Spielstraßen oder Zentren eine Zone mit einer Geschwindigkeitsbeschränkung, beispielsweise auf Tempo 30 km/h permanent ausgewiesen wird, und das Elektrofahrzeug über das Energie- oder Batteriemanagement so gesteuert wird, dass der Fahrer dort nicht schneller fahren kann.

Figur 1 zeigt in schematischer Weise den grundsätzlichen Aufbau eines erfindungsgemäßen Fahrzeugs anhand eines bevorzugten Ausführungsbeispiels der vorliegenden Erfindung. Ein Benutzer B verschafft sich Zugang zu einem Fahrzeug FZ, indem er eine tragbare Kontrolleinrichtung ME, vorzugsweise eine Chipkarte, beispielsweise einer SIM- oder USIM-Karte eines Mobilfunknetzbetreibers, einen so genannten "Personal Digital Assistant", ein "Notebooks", ein Mobiltelefon oder eine ähnliche als elektronischer Berechtigungsausweis wirkende Einrichtung in einen eine Datenkommunikation ermöglichende galvanische oder kontaktlose Verbindung mit einer Steuereinrichtung C des Fahrzeugs FZ bringt, wobei auf dieser tragbaren Kontrolleinrichtung ME Daten D gespeichert sind, die Informationen über die Betriebsweise des elektrochemischen Energiespeichers des Fahrzeugs FZ enthalten. Die Steuereinrichtung C steuert mit Hilfe dieser Daten D den Betrieb des Fahrzeugs durch eine Beeinflussung der Betriebsweise des elektrochemischen Energiespeichers ECS des Fahrzeugs FZ, welcher beispielsweise den Motor M des Fahrzeugs antreibt.

Figur 2 zeigt in schematischer Weise das grundsätzliche Zusammenwirken verschiedener Komponenten eines erfindungsgemäßen Fahrzeugs in Zusammenhang mit einem erfindungsgemäßen Verfahren anhand eines bevorzugten Ausführungsbeispiels der vorliegenden Erfindung. Daten D über die Betriebsweise des elektrochemischen Energiespeichers ECS des Fahrzeugs FZ werden von einem Programmiergerät PG in einen Datenspeicher DS der tragbaren Kontrolleinrichtung ME geschrieben. Die Daten D fließen 1, 4, 6 dabei über die vorzugsweise bidirektionale Kommunikationsschnittstelle I/O der tragbaren Kontrolleinrichtung ME von einem Programmiergerät PG über die Kommunikationsschnittstelle I/O in den Datenspeicher DS der tragbaren Kontrolleinrichtung. Dies geschieht aus Sicherheitsgründen vorzugsweise mit Hilfe eines Prozessors P, ohne den vorzugsweise nicht auf den Datenspeicher DS zugegriffen werden kann.

Eine Steuereinrichtung C des Fahrzeugs liest 3 - und schreibt vorzugsweise auch - Daten in den Datenspeicher DS der tragbaren Kontrolleinrichtung, wobei dies vorzugsweise wieder ausschließlich vermittelt durch den Prozessor P geschieht, ohne den vorzugsweise nicht auf den Datenspeicher DS zugegriffen werden kann. Die Steuereinrichtung C beeinflusst 2 dann die Betriebsweise des elektrochemischen Energiespeichers ECS und damit die Betrieb des Fahrzeugs FZ, welches vorzugsweise durch diesen elektrochemischen Energiespeicher ECS angetrieben wird. Sofern die Steuereinrichtung C Daten in den Datenspeicher DS der tragbaren Kontrolleinrichtung ME schreibt, handelt es sich vorzugsweise um Daten, die der leistungsabhängigen Vergebührung des Benutzers in Abhängigkeit von der von dem Benutzer des Fahrzeugs gewählten Betriebsweise des Fahrzeugs FZ dienen.

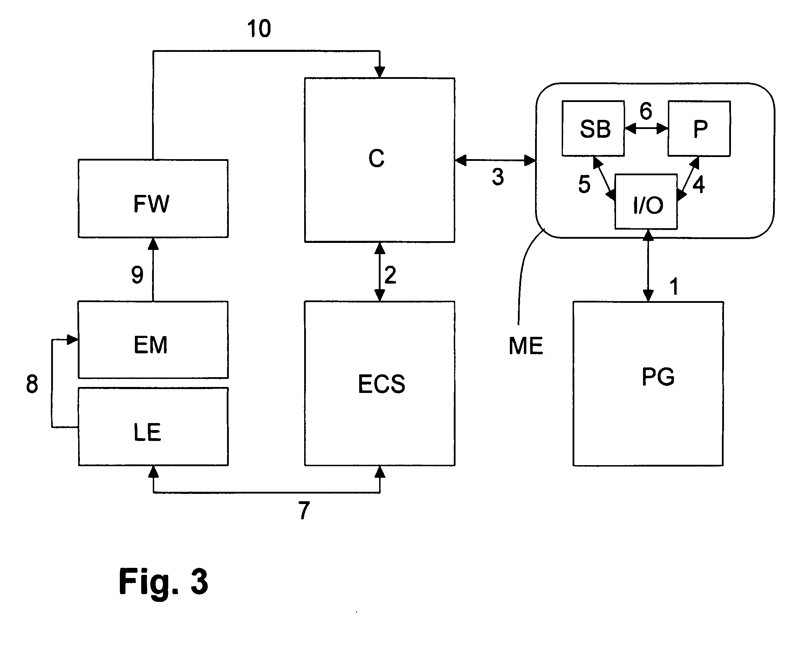

Figur 3 zeigt in schematischer Weise ein weiteres Ausführungsbeispiel der vorliegenden Erfindung. Die Steuereinrichtung C des Fahrzeugs FZ empfängt 10 vom Fahrwerk FW oder von am Fahrzeug FZ angebrachten Sensoren wie Kameras oder ähnlichen Einrichtungen Signale, aus denen die tatsächliche Geschwindigkeit des Fahrzeugs und/oder die zulässige Höchstgeschwindigkeit des Fahrzeugs ermittelt werden können. In Abhängigkeit von diesen Signalen 10 und in Abhängigkeit von den Daten D, die auf der tragbaren Kontrolleinrichtung ME gespeichert sind, beeinflusst die Steuerungseinrichtung C die Betriebsweise des elektrochemischen Energiespeichers, also beispielsweise des maximale Leistungsabgabe oder andere Betriebsparameter und damit die Betriebsweise des Fahrzeugs, beispielsweise dessen Geschwindigkeit oder dessen verfügbare Höchstgeschwindigkeit, je nach Ausführungsform der Erfindung.

Die Steuereinrichtung kommuniziert 2 mit dem elektrochemischen Energiespeicher ECS und dieser führt 7 über eine Leistungselektronik LE dem Elektromotor EM die abgegebene Leistung 8 zu. Der Elektromotor treibt 9 mit dieser Leistung das Fahrwerk FW an.

Im Zusammenhang mit der Beschreibung der vorliegenden Erfindung anhand der Figuren wurden folgende Bezugzeichen verwendet:
- ECS: elektrochemischer Energiespeicher
- M: Motor
- C: Steuereinrichtung, Bordcomputer
- ME: tragbare Kontrolleinrichtung, Chipkarte
- B: Benutzer des Fahrzeugs
- FZ: Fahrzeug
- PG: Programmiergerät
- I/O: Kommunikationsschnittstelle
- P: Prozessor
- DS: Datenspeicher
- SB: Speicherbereich
- PS: Programmspeicher
- LE: Leistungselektronik
- EM: Elektromotor
- FW: Fahrwerk
- 1 - 10: Datenkommunikation, Datenfluss

## Patentansprüche

1. Verfahren zur Steuerung des Betriebs eines über einen elektrochemischen Energiespeicher (ECS) verfügenden Fahrzeugs (FZ),
wobei eine tragbare, vom Fahrzeug entfernbare Kontrolleinrichtung (ME) einem Benutzer des Fahrzeugs den Betrieb des Fahrzeugs ermöglicht, **dadurch gekennzeichnet, dass** die Kontrolleinrichtung dafür vorgesehen ist, Daten (D) über die Betriebsweise des elektrochemischen Energiespeichers (ECS) des Fahrzeugs (FZ) in einem Datenspeicher (DS) der Kontrolleinrichtung (ME) zu speichern.

2. Verfahren nach Anspruch 1,
**dadurch gekennzeichnet, dass**
die tragbare, vom Fahrzeug entfernbare Kontrolleinrichtung (ME) zur Speicherung von Daten einem Benutzer des Fahrzeugs den Betrieb des Fahrzeugs in einer Weise ermöglicht, die zumindest auch durch Daten (D) über die Betriebsweise des elektrochemischen Energiespeichers (ECS) des Fahrzeugs (FZ) charakterisiert wird, welche in einem Datenspeicher (DS) der Kontrolleinrichtung gespeichert sind.

3. Verfahren nach einem der vorhergehenden Ansprüche,
**dadurch gekennzeichnet, dass**
das Fahrzeug (FZ) einen Antrieb (EM) aufweist, der wenigstens teilweise aus dem elektrochemischen Energiespeicher (ECS) mit Energie versorgt wird.

4. Verfahren nach einem der vorhergehenden Ansprüche,
**dadurch gekennzeichnet, dass**
das Fahrzeug (FZ) einen Antrieb (EM) aufweist, der ausschließlich aus dem elektrochemischen Energiespeicher (ECS) mit Energie versorgt wird.

5. Verfahren nach einem der vorhergehenden Ansprüche,
**dadurch gekennzeichnet, dass**
die Daten (D) eine Sperrung oder Entsperrung des elektrochemischen Energiespeichers des Fahrzeugs ermöglichen.

6. Verfahren nach einem der vorhergehenden Ansprüche,
**dadurch gekennzeichnet, dass**
die Daten (D) eine Steuerung der Leistungsabgabe des elektrochemischen Energiespeichers des Fahrzeugs bewirken.

7. Verfahren nach einem der vorhergehenden Ansprüche,
**dadurch gekennzeichnet, dass**
die Daten (D) eine Steuerung der Leistungsabgabe des elektrochemischen Energiespeichers in Abhängigkeit von der Geschwindigkeit des Fahrzeugs bewirken.

8. Verfahren nach einem der vorhergehenden Ansprüche,
**dadurch gekennzeichnet, dass**
die Daten (D) eine Steuerung der Leistungsabgabe des elektrochemischen Energiespeichers in Abhängigkeit von einer für das Fahrzeug geltenden oder von einer durch den Benutzer des Fahrzeugs zu beachtenden Höchstgeschwindigkeit bewirken.

9. Tragbare Kontrolleinrichtung (ME) zur Steuerung des Betriebs eines über einen elektrochemischen Energiespeicher (ECS) verfügenden Fahrzeugs (FZ),
wobei die Kontrolleinrichtung (ME) vom Fahrzeug entfernt werden kann, einem
Benutzer des Fahrzeugs den Betrieb des Fahrzeugs ermöglicht, **dadurch gekennzeichnet, dass** diese Mittel zur Speicherung von Daten in einem Datenspeicher (DS) der Kontrolleinrichtung (ME) aufweist, wobei diese Kontrolleinrichtung dafür vorgesehen ist, Daten (D) über die Betriebsweise des elektrochemischen Energiespeichers (ECS) des Fahrzeugs (FZ) in dem Datenspeicher (DS) zu speichern.

10. Kontrolleinrichtung nach Anspruch 9,
**dadurch gekennzeichnet, dass**
die Kontrolleinrichtung (ME) ausgebildet ist, um ein Verfahren zur Steuerung des Betriebs eines über einen elektrochemischen Energiespeicher (ECS) verfügenden Fahrzeugs (FZ) auszuführen

11. Kontrolleinrichtung nach Anspruch 9 oder 10,
**dadurch gekennzeichnet, dass**
sie Mittel zur Speicherung und Verarbeitung von Daten aufweist.

12. Fahrzeug mit einem elektrochemischen Energiespeicher, dessen Betrieb durch eine tragbare Kontrolleinrichtung (ME) gesteuert wird,
**dadurch gekennzeichnet, dass**
diese Kontrolleinrichtung (ME) nach einem der Ansprüche 9 bis 11 ausgebildet ist.

13. Fahrzeug nach Anspruch 12,
**dadurch gekennzeichnet, dass**
das Fahrzeug (FZ) einen Antrieb (EM) aufweist, der wenigstens teilweise aus dem elektrochemischen Energiespeicher (ECS) mit Energie versorgt wird.

14. Fahrzeug nach Anspruch 13,
**dadurch gekennzeichnet, dass**
das Fahrzeug (FZ) einen Antrieb (EM) aufweist, der ausschließlich aus dem elektrochemischen Energiespeicher (ECS) mit Energie versorgt wird.

## Claims

1. A method for controlling the operation of a vehicle (FZ) having an electrochemical energy store (ECS), wherein a portable control device (ME) able to be removed from the vehicle enables a user of the vehicle to operate the vehicle,
**characterized in that**
the control device is provided for storing data (D) on the operational mode of the electrochemical energy store (ECS) of the vehicle (FZ) in a memory (DS) of the control device (ME).

2. The method according to claim 1,
**characterized in that**
the portable control device (ME) able to be removed from the vehicle for storing data enables a user of the vehicle to operate the vehicle in a manner that is at least also **characterized by** the data (D) on the operational mode of the electrochemical energy store (ECS) of the vehicle (FZ) stored in a memory (DS) of the control device.

3. The method according to any one of the preceding claims,
**characterized in that**
the vehicle (FZ) has a drive (EM) which is at least partly supplied with energy from the electrochemical energy store (ECS).

4. The method according to any one of the preceding claims,
**characterized in that**
the vehicle (FZ) has a drive (EM) which is exclusively supplied with energy from the electrochemical energy store (ECS).

5. The method according to any one of the preceding claims,
**characterized in that**
the data (D) enables blocking or unblocking the vehicle's electrochemical energy store.

6. The method according to any one of the preceding claims,
**characterized in that**
the data (D) effects a control of the vehicle's electrochemical energy store output.

7. The method according to any one of the preceding claims,
**characterized in that**
the data (D) effects a control of the electrochemical energy store output as a function of the speed of the vehicle.

8. The method according to any one of the preceding claims,
**characterized in that**
the data (D) effects a control of the electrochemical energy store output as a function of a maximum speed applicable to the vehicle or to be observed by the user of the vehicle.

9. A portable control device (ME) for controlling the operation of a vehicle (FZ) having an electrochemical energy store (ECS), wherein the control device (ME) can be removed from the vehicle, enabling a user of the vehicle to operate the vehicle,
**characterized in that**
same comprises means for storing data in a memory (DS) of the control device (ME), wherein the control device is provided for storing data (D) on the operational mode of the electrochemical energy store (ECS) of the vehicle (FZ) in the memory (DS).

10. The control device according to claim 9,
**characterized in that**
the control device (ME) is designed to realize a method of controlling the operation of a vehicle (FZ) having an electrochemical energy store (ECS).

11. The control device according to claim 9 or 10,
**characterized in that**
same comprises means for storing and processing data.

12. A vehicle with an electrochemical energy store, the operation of which is controlled by a portable control device (ME),
**characterized in that**
said control device (ME) is designed in accordance with one of claims 9 to 11.

13. The vehicle according to claim 12,
**characterized in that**
the vehicle (FZ) has a drive (EM) which is at least partly supplied with energy from the electrochemical energy store (ECS).

14. The vehicle according to claim 13,
**characterized in that**
the vehicle (FZ) has a drive (EM) which is exclusively supplied with energy from the electrochemical energy store (ECS).

## Revendications

1. Procédé de commande de l'opération d'un véhicule (FZ) disposant d'un accumulateur électrochimique d'énergie (ECS) pour lequel un dispositif de contrôle portatif amovible du véhicule (ME) permet à un utilisateur d'opérer le véhicule
**caractérisé en ce que**
le dispositif de contrôle est prévu pour mémoriser des données (D) relatives au mode de fonctionnement de l'accumulateur électrochimique d'énergie (ECS) du véhicule (FZ) dans une mémoire de données (DS) du dispositif de contrôle (ME).

2. Procédé selon la revendication 1
**caractérisé en ce que**
le dispositif de contrôle portatif amovible du véhicule (ME) pour la mémorisation de données permet à un utilisateur du véhicule d'opérer celui-ci d'une façon qui est au moins également **caractérisée par** des données (D) relatives au mode opératoire de l'accumulateur électrochimique d'énergie (ECS) du véhicule (FZ), et qui sont mémorisées dans une mémoire de données (DS) du dispositif de contrôle.

3. Procédé selon l'une des revendications précédentes
**caractérisé en ce que**
le véhicule (FZ) présente un entraînement (EM) alimenté en énergie au moins partiellement à partir de l'accumulateur électrochimique d'énergie (ECS).

4. Procédé selon l'une des revendications précédentes
**caractérisé en ce que**
le véhicule (FZ) présente un entraînement (EM) alimenté en énergie uniquement à partir de l'accumulateur électrochimique d'énergie (ECS).

5. Procédé selon l'une des revendications précédentes
**caractérisé en ce que**
les données (D) permettent un verrouillage ou un déverrouillage de l'accumulateur électrochimique d'énergie du véhicule.

6. Procédé selon l'une des revendications précédentes
**caractérisé en ce que**
les données (D) provoquent une commande du transfert de puissance de l'accumulateur électrochimique d'énergie du véhicule.

7. Procédé selon l'une des revendications précédentes
**caractérisé en ce que**
les données (D) provoquent une commande du transfert de puissance de l'accumulateur électrochimique d'énergie en fonction de la vitesse du véhicule.

8. Procédé selon l'une des revendications précédentes
**caractérisé en ce que**
les données (D) provoquent une commande du transfert de puissance de l'accumulateur électrochimique d'énergie en fonction d'une vitesse maximale valable pour le véhicule ou d'une vitesse maximale à respecter par l'utilisateur du véhicule.

9. Dispositif de contrôle portatif (ME) d'un véhicule (FZ) disposant d'un accumulateur électrochimique d'énergie (ECS), le dispositif de contrôle pouvant être retiré du véhicule permettant à un utilisateur l'opération de ce véhicule (FZ),
**caractérisé en ce que**
celui-ci présente des moyens de mémorisation de données dans une mémoire de données (DS) du dispositif de contrôle (ME), ce dispositif de contrôle (ME) étant prévu pour mémoriser des données concernant le mode de service de l'accumulateur électrochimique d'énergie (ECS) du véhicule (FZ) dans la mémoire de données (DS).

10. Dispositif de contrôle selon la revendication 9,
**caractérisé en ce que**
le dispositif de contrôle (ME) est conçu pour exécuter un procédé de commande de l'opération d'un véhicule (FZ) disposant d'un accumulateur électrochimique d'énergie (ECS).

11. Dispositif de contrôle selon la revendication 9 ou 10,
**caractérisé en ce que**
qu'il présente des moyens de mémorisation et de traitement de données.

12. Véhicule disposant d'un accumulateur électrochimique d'énergie dont l'opération est commandée par un dispositif de contrôle portatif (ME)
**caractérisé en ce que**
ce dispositif de contrôle (ME) est conçu selon l'une des revendications 9 à 11.

13. Véhicule selon la revendication 12
**caractérisé en ce que**
le véhicule (FZ) présente un entraînement (EM) alimenté en énergie au moins partiellement à partir de l'accumulateur électrochimique d'énergie (ECS).

14. Véhicule selon la revendication 13
**caractérisé en ce que**
le véhicule (FZ) présente un entraînement (EM) alimenté en énergie uniquement à partir de l'accumulateur électrochimique d'énergie (ECS).
